# FASCICULE DE BREVET EUROPEEN

(11) **EP 2 469 959 B1**
(45) Date de publication et mention de la délivrance du brevet: **06.12.2017**
(21) Numéro de dépôt: 11195055.6
(22) Date de dépôt: 21.12.2011
(51) Int. Cl.: H04W 76/04, H04W 36/14, H04W 76/02

(54) **Procédé et dispositif de gestion d´une session de communication entre un terminal multi-accès et un serveur ANDSF**
Verfahren und Vorrichtung für die Verwaltung einer Service-Sitzung zwischen einem Multi-Mode-Terminal und einem ANDSF Server
Method and apparatus for managing a service session between a multi-mode terminal and an ANDSF server

(30) Priorité: 21.12.2010 FR 1060956
(43) Date de publication de la demande: 27.06.2012
(73) Titulaire: Orange, 75015 Paris (FR)
(72) Inventeur: Benali, Nasr, 92400 Courbevoie (FR)

(56) Documents cités:
- MOTOROLA: "ANDSF push not mandated in all access networks", 3GPP DRAFT; S2-091499_WAS_0946_ANDSF_PUSH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest; 20090218, 18 février 2009 (2009-02-18), XP050333814,
- "3rd Generation Partnership Project; Technical Specification Group Services and System Aspects; 3GPP System Architecture Evolution (SAE); Security aspects of non-3GPP accesses (Release 9)", 3GPP STANDARD; 3GPP TS 33.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.5.0, 6 octobre 2010 (2010-10-06), pages 1-47, XP050461870,
- NOKIA SIEMENS NETWORKS ET AL: "Discussion about ANDSF discovery and bootstrapping", 3GPP DRAFT; C1-090745, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Antonio; 20090224, 24 février 2009 (2009-02-24), XP050311140,
- QUALCOMM INCORPORATED: "Discussion paper on interactions between ANDSF and UE supporting different releases", 3GPP DRAFT; C1-101701-OMA-DM-MO-IDENTIFIER-ISSUE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Kyoto; 20100510, 17 mai 2010 (2010-05-17), XP050409588,

## Description

L'invention concerne un procédé et un dispositif de gestion d'une session de communication entre un terminal multi-accès et un dispositif de gestion de mobilité de réseaux d'accès hétérogènes. En particulier, l'invention concerne le maintien d'une session de communication d'un terminal multi-accès avec un serveur de gestion de mobilité de réseau d'accès hétérogène spécifiée par le standard 3GPP, dans les spécifications TS 24.302 et TS24.312, sous l'appellation ANDSF (Access Network Detection and Selection).

Le serveur ANDSF fournit sur demande d'un terminal multi-accès des informations sur la topologie des réseaux d'accès alternatifs se trouvant dans la zone géographique du terminal multi-accès.

La base de données ANDSF comporte au moins deux types d'informations : une information sur la topologie de réseaux d'accès hétérogènes, notamment en raison de leur appartenance à différentes technologies radio, et une information sur des règles de sélection d'un réseau d'accès, notamment des règles d'un opérateur de télécommunication.

L'information sur la topologie des réseaux d'accès permet notamment à un terminal de communication multi-accès intégrant deux interface radio différentes, aussi appelé terminal de communication multi-accès *Mobi*le ou terminal multi-accès bi-mode, tels que UMTS (pour Universal *Mobile* Télécommunication System ou système de télécommunication Mobile universel en français)/WLAN (pour Wireless Local Area Network ou réseau local sans fil en français), d'être informé à l'aide de cette base de données ANDSF des points d'accès de son deuxième réseau d'accès, notamment WLAN, se trouvant dans sa localisation courante de son premier réseau d'accès, notamment UMTS.

L'information de topologie des réseaux d'accès, appelée information de découverte des réseaux d'accès ou Discovery Information en anglais dans les spécifications 3GPP relatives à la plateforme ANDSF comportant la base de données ANDSF, notamment les spécifications 3GPP TS 24.312, est composée de plusieurs attributs dont :
- le type d'accès, c'est-à-dire le type de réseau d'accès auquel se rapporte l'information de topologie, par exemple UMTS, WLAN, WiMAX, etc.,
- un ou plusieurs identifiants de points d'accès appartenant au réseau d'accès du type d'accès défini dans l'attribut précédent,
- une zone géographique (cellule GSM, couverture d'un point d'accès WLAN, autre représentation géographique...) dans laquelle les points d'accès définis dans l'attribut précédent sont opérationnels.

Ainsi, un terminal de communication multi-accès recevra l'information de topologie dont l'attribut de zone géographique correspondant à la zone géographique dans laquelle le terminal de communication multi-accès se trouve.

Pour recevoir ces informations, le terminal multi-accès contacte un serveur ANDSF suivant des événements précis (changement de localisation, session qui se dégrade.). Le terminal multi-accès établit une session de communication avec le serveur ANDSF. Cette session de communication est sécurisée, généralement à travers la mise place d'un tunnel sécurisé tel que VPN. Pour cela, le terminal mobile contacte une plateforme d'authentification afin d'être autorisé à établir la session de communication sécurisée.

Avant d'effectuer la mobilité entre deux réseaux d'accès, le terminal multi-accès commence par détecter la nécessité d'initier la procédure de mobilité en se basant notamment sur divers déclencheurs tel que la dégradation du canal de transmission de service. Si une mobilité d'accès est initiée, le terminal multi-accès négocie avec le serveur ANDSF une session de communication.

La session de communication entre le terminal multi-accès et le serveur ANDSF comporte une première phase de découverte du serveur ANDSF le plus approprié et d'une deuxième phase d'établissement d'un tunnel sécurisé.

Une fois la session de communication établie, le terminal multi-accès peut décider en fonction des informations de topologie disponibles dans sa mémoire (ayant été récupérées de la base de données ANDSF) de l'intérêt d'effectuer la mobilité. Si le terminal multi-accès n'a pas d'informations de topologie dans sa mémoire et que la mobilité vers un système d'accès alternatif se révèle nécessaire, le terminal multi-accès peut contacter la base de données ANDSF afin de récupérer des informations topologie. Si la mobilité est décidée vers un réseau d'accès cible, celle-ci est exécutée. La procédure de mobilité est terminée lorsque le service est fournit au terminal multi-accès via le réseau d'accès cible.

Les enseignements des documents "MOTOROLA: ANDSF push not mandated in all access networks, 3GPP DRAFT; S2-091499_WAS_0946_ANDSF_PUSH, 3RD GENERATION PARTNERSHIP PROJECT (3GPP), 18 février 2009" et "3GPP STANDARD TS 33.402 V9.5.0, 6 octobre 2010" sont utiles à la compréhension de la présente invention.

Un des buts de la présente invention est d'apporter des améliorations par rapport à l'état de la technique.

Un objet de l'invention est un procédé de gestion d'une session de communication entre un terminal multi-accès et un dispositif de gestion de mobilité de réseaux d'accès hétérogènes de type ANDSF. Le procédé de gestion comporte un maintien d'une session de communication ouverte entre ledit terminal multi-accès et ledit dispositif de gestion de mobilité de réseaux d'accès hétérogènes durant une session de service entre ledit terminal multi-accès et un dispositif de fourniture de service, ladite session de service permettant une fourniture par ledit dispositif de fourniture de service d'un service audit terminal multi-accès, le maintien comportant un envoi périodique de notification vers le dispositif de gestion de mobilité de réseaux d'accès hétérogènes de type ANDSF. Ainsi, durant une session de service, le délai de mobilité d'accès est au moins réduit lors des mobilités ultérieures. Cela est notamment dû au fait que la session de communication entre un terminal multi-accès et un base de données ANDSF a été ouverte et maintenue durant l'exécution du service permettant, le moment venu, au terminal multi-accès de récupérer l'information topologie de l'ANDSF sans établir au préalable une session sécurisée avec l'ANDSF vu qu'elle a été établit au début du service. Cela permet d'éviter ou au moins de réduire la probabilité que le service en cours d'exécution se dégrade.

Avantageusement, le maintien est déclenché par une demande d'établissement de ladite session de service.

Ainsi, durant une session de service, le délai de mobilité d'accès est au moins réduit pour toutes les mobilités d'accès y compris la première réduisant le temps de la découverte des réseaux d'accès alternatifs et par conséquent réduisant la probabilité que le service en cours d'exécution se dégrade (notamment quand le service en cours d'exécution requiert une découverte rapide des réseaux alternatifs).

Avantageusement, ledit maintien de la session de communication entre un terminal multi-accès et un dispositif de gestion de mobilité de réseaux d'accès hétérogènes est effectué tant que ladite session de service reste ouverte.

Avantageusement, le procédé de gestion comporte un arrêt dudit maintien déclenchée par une demande de clôture de la session de service.

Avantageusement, le procédé de gestion comporte une clôture de la session de communication déclenchée par une demande de clôture de la session de service.

Ainsi, durant une session de service, le délai de mobilité d'accès est au moins réduit à partir de l'ouverture de la session de communication entre un terminal multi-accès et un dispositif de gestion de mobilité de réseaux d'accès hétérogènes jusqu'à la fin de la session de service. Cela permet d'éviter ou au moins de réduire la dégradation du service.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie de dispositif de gestion d'une session de communication entre un terminal multi-accès et un dispositif de gestion de mobilité de réseaux d'accès hétérogènes et étant conçus pour commander l'exécution des différentes étapes de ce procédé.

L'invention vise donc aussi un programme d'ordinateur comprenant des instructions de code de programme pour l'exécution des étapes du procédé de gestion d'une session de communication entre un terminal multi-accès et un dispositif de gestion de mobilité de réseaux d'accès hétérogènes lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

Un objet de l'invention est aussi un dispositif de gestion d'une session de communication entre un terminal multi-accès et un dispositif de gestion de mobilité de réseaux d'accès hétérogènes de type ANDSF. Le dispositif de gestion comporte des moyens de maintien d'une session de communication ouverte entre ledit terminal multi-accès et ledit dispositif de gestion de mobilité de réseaux d'accès hétérogènes de type ANDSF durant une session de service entre ledit terminal multi-accès et un dispositif de fourniture de service, ledit dispositif de fourniture de service étant apte à fournir un service à travers ladite session de service audit terminal multi-accès, les moyens de maintien comportant un émetteur périodique de notification vers le dispositif de gestion de mobilité de réseaux d'accès hétérogènes de type ANDSF. Un objet de l'invention est encore un dispositif de gestion de mobilité de réseau d'accès hétérogènes de type ANDSF. comportant:
- un dispositif de consultation apte à transmettre à un terminal de communication multi-accès au moins une information sur la topologie d'au moins un réseau d'accès dans une zone géographique spécifiée
- une base de données d'information sur la topologie de réseaux d'accès hétérogènes,
- des moyens de maintien d'une session de communication ouverte entre ledit terminal multi-accès et ledit dispositif de gestion de mobilité de réseaux d'accès hétérogènes de type ANDSF durant une session de service entre ledit terminal multi-accès et un dispositif de fourniture de service, ledit dispositif de fourniture de service étant apte à fournir un service à travers ladite session de service audit terminal multi-accès, les moyens de maintien comportant un émetteur périodique de notification vers ledit terminal.
Un objet de l'invention est également un terminal de communication multi-accès comportant :
- Plusieurs interfaces d'accès à des réseaux d'accès hétérogènes,
- un dispositif de mobilité de réseaux d'accès dudit terminal multi-accès entre un premier réseau d'accès parmi lesdits réseaux d'accès et un deuxième réseau d'accès parmi lesdits réseaux d'accès, ledit dispositif de mobilité étant apte à échanger avec un dispositif de gestion de mobilité de réseaux d'accès hétérogènes de type ANDSF par une session de communication entre ledit terminal multi-accès et ledit dispositif de gestion de mobilité de de réseaux d'accès hétérogènes de type ANDSF,
- des moyens de maintien d'une session de communication ouverte entre ledit terminal multi-accès et ledit dispositif de gestion de mobilité de réseaux d'accès hétérogènes de type ANDSF durant une session de service entre ledit terminal multi-accès et un dispositif de fourniture de service, ledit dispositif de fourniture de service étant apte à fournir un service à travers
   ladite session de service audit terminal multi-accès, les moyens de maintien comportant un émetteur périodique de notification vers le dispositif de gestion de mobilité de réseaux d'accès hétérogènes de type ANDSF.
Les caractéristiques et avantages de l'invention apparaîtront plus clairement à la lecture de la description, faite à titre d'exemple, et des figures s'y rapportant qui représentent :

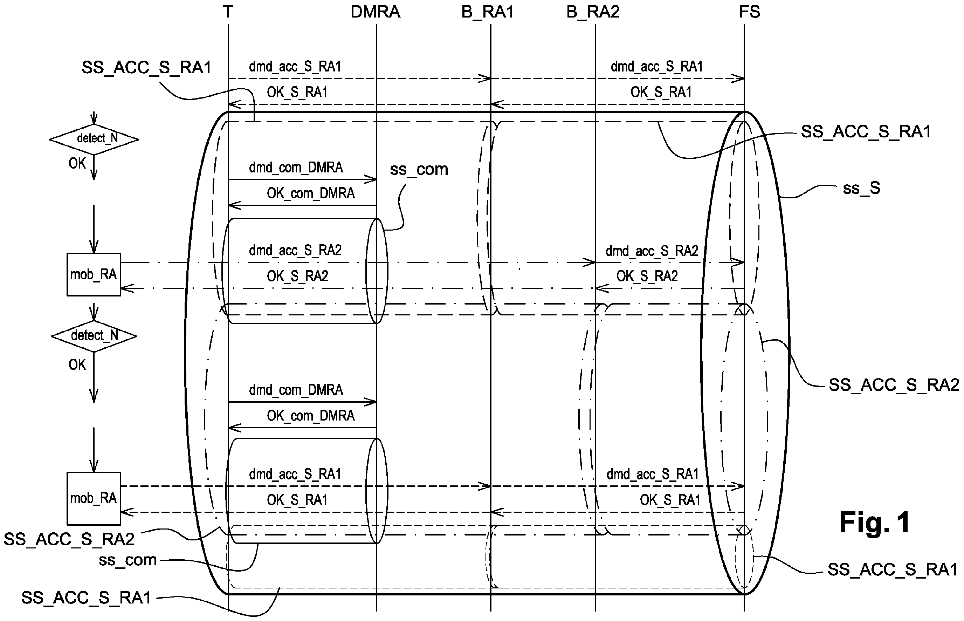

- Figure 1, un schéma simplifié des échanges de flux lors de l'accès à un service nécessitant deux mobilités de réseaux d'accès selon l'art antérieur,

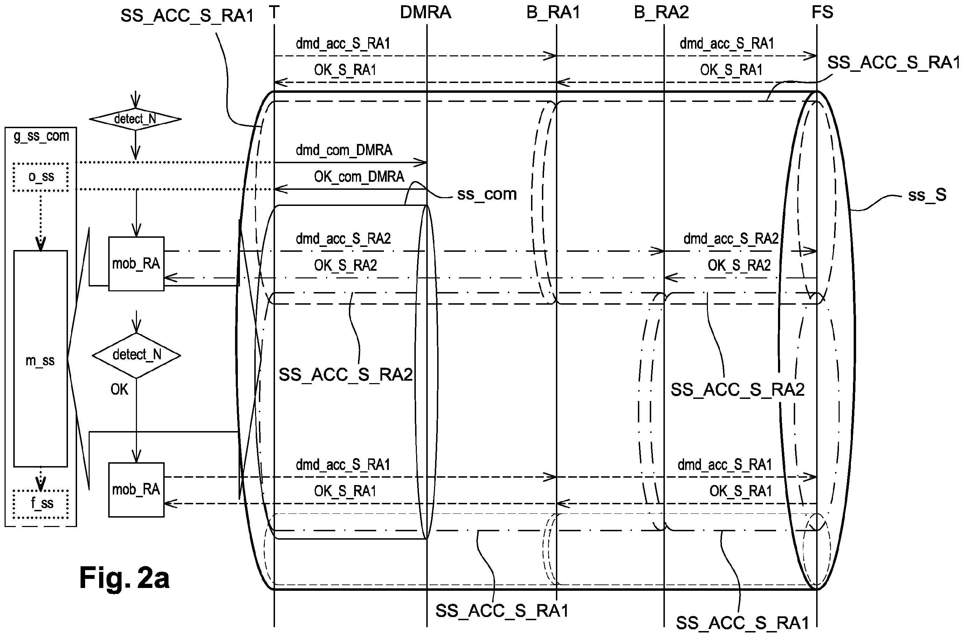

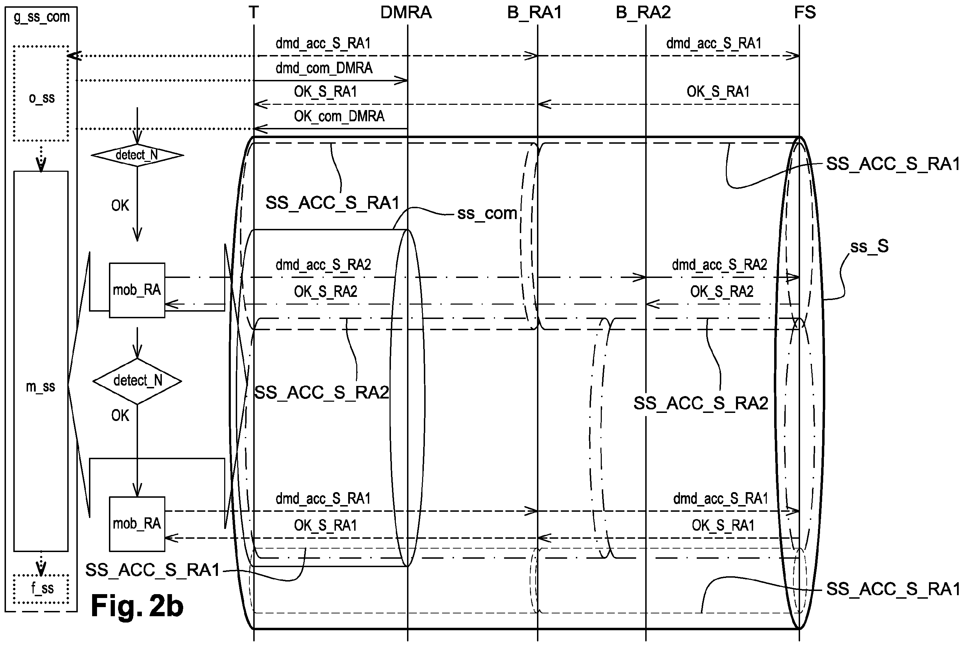

- Figures 2a et 2b, un schéma simplifié des échanges de flux lors de l'accès à un service nécessitant deux mobilités de réseaux d'accès utilisant un procédé de gestion de session de communication entre un terminal multi-accès et un dispositif de gestion de mobilité de réseaux d'accès hétérogène selon l'invention, dans deux modes de réalisations de ce procédé selon l'invention,

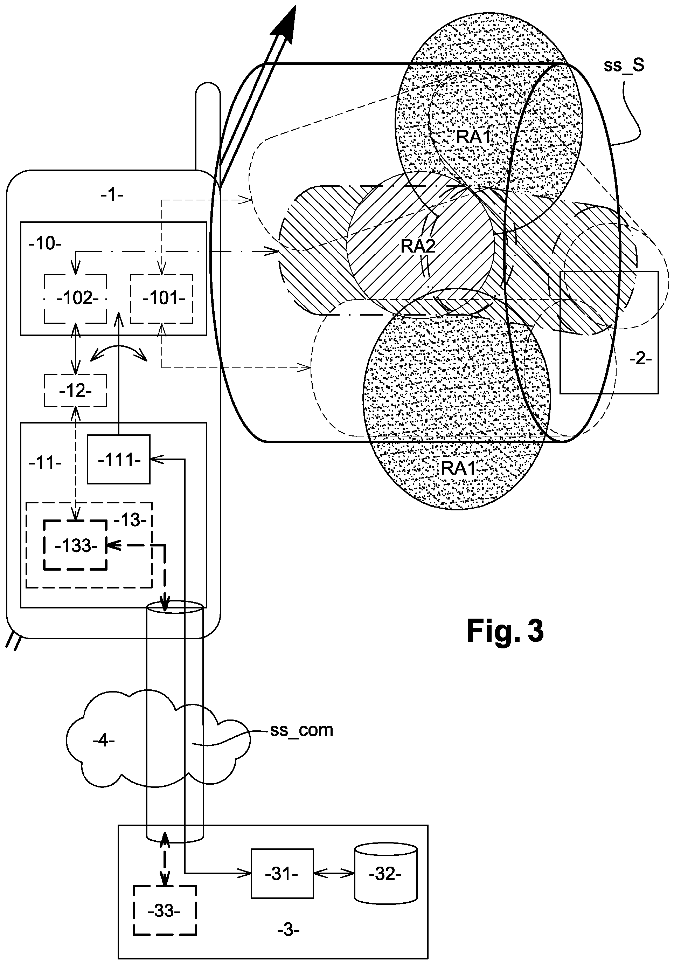

- Figure 3, une architecture de communication utilisant un dispositif de gestion de session de communication, selon l'invention, entre un terminal multi-accès et un dispositif de gestion de mobilité de réseaux d'accès hétérogène et/ou un dispositif de gestion de mobilité de réseaux d'accès hétérogène selon l'invention et/ou un terminal multi-accès selon l'invention.

L'invention peut être implémentée pour toute mobilité de réseau d'accès utilisant une base de données d'information de topologie sur ces réseaux d'accès hétérogènes. Elle sera plus particulièrement décrite dans le cas d'un système de mobilité de réseaux d'accès hétérogènes de type ANSF selon les spécifications 3GPP TS 24.302 et TS 24.312 mettant en oeuvre une plateforme ANDSF comportant un serveur OMA-DM et une base de données ANDSF, ainsi qu'un client OMA-DM sur un terminal Mobile multi-accès. L'invention sera particulièrement intéressante dans le cadre d'une mobilité entre un réseau d'accès GSM et un réseau d'accès WLAN mais peut sans modification technique de celle-ci être appliqué à des mobilités de et vers d'autres réseaux d'accès notamment WiMAX.

Par réseau de communication est entendu un système comportant des moyens d'émission et de réception apte à permettre l'établissement d'une communication entre un terminal de communication et un dispositif de communication tel qu'un autre terminal de communication ou un dispositif de communication délivrant un service, notamment un serveur.

Par réseau d'accès est entendu un système composé de points d'accès, notamment des stations de base GSM ou UMTS ou des points d'accès WLAN ou WiMAX, et au moins une interface de communication entre ces points d'accès et un réseau de communication, notamment Internet ou GSM.

Par réseaux d'accès hétérogènes sont entendus des réseaux d'accès proposant des types d'accès différents à un réseau de communication. Ces réseaux d'accès hétérogènes ne communiquent donc pas entre eux et, notamment, ne permettent pas une mobilité d'un point d'accès d'un premier réseau d'accès à un deuxième réseau d'accès. Ces réseaux d'accès hétérogènes nécessitent donc l'utilisation d'un système de mobilité de réseaux d'accès hétérogènes comportant une base de données d'information de topologie sur ces réseaux d'accès hétérogènes pour mettre en oeuvre la mobilité d'un premier réseau d'accès vers un deuxième réseaux d'accès proposant un type accès distinct de celui du premier réseau d'accès.

Par points d'accès sont entendus tous dispositifs émetteur/récepteur auxquels un terminal de communication peut se rattacher pour se connecter à un réseau de communication, notamment les stations de base de la téléphonie Mobile telles que les stations GSM, UMTS, etc. ; les bornes radio telles que les points d'accès WLAN (donc incluses les bornes Wifi), WiMAX, etc. ; ...

Par zone de couverture d'un point d'accès est entendue la zone géographique dans laquelle un terminal reçoit et émet vers ce point d'accès pour échanger à travers un réseau de communication.

Par zone géographique est entendu un espace géographique délimité qui peut être définie par un bâtiment : aéroport, mairie, etc., par une zone de couverture d'un point d'accès notamment une cellule GSM, une zone délimitée par les cordonnées (longitude, latitude et rayon)...

Par terminal de communication multi-accès est entendu un terminal apte à se connecter à au moins un réseau de communication et disposant d'au moins deux interfaces d'accès à des réseaux d'accès proposant des accès de type différents, par exemple un terminal bi-mode UMTS/WLAN...

Par information sur la topologie des réseaux d'accès hétérogènes est entendu toute information permettant de définir un lieu, notamment une zone géographique, et ses propriétés en termes d'accès à un réseau de communication, les points d'accès disponibles des différents types d'accès dans cette zone géographique.

La figure 1 illustre un schéma simplifié des échanges de flux lors de l'accès à un service. A titre d'exemple, durant l'exécution du service, deux mobilités de réseaux d'accès sont effectuées. Ce schéma est décrit selon l'art antérieur.

Lorsqu'un terminal multi-accès T souhaite accéder à un service délivré par un dispositif de fourniture de service FS, le terminal multi-accès T se trouvant dans la zone de couverture d'un point d'accès B_RA1 d'un premier réseau d'accès RA1 en fait la demande à travers ce premier réseau d'accès RA1 en envoyant une requête de demande d'accès au service dm_acc_S_RA1 à ce point d'accès B_RA1 qui la transmet au dispositif de fourniture de service FS.

Une session d'accès au service SS_ACC_S_RA1 est ouverte entre le terminal multi-accès T et le dispositif de fourniture de service FS, à travers le premier réseau d'accès RA1 via le point d'accès B_RA1, éventuellement suite à une acceptation OK_S_RA1 de fourniture de service donnée par le dispositif de fourniture de service FS. L'ouverture de cette session d'accès correspond à l'ouverture de la session de service ss_S permettant au dispositif de fourniture FS de fournir le service S demandé au terminal multi-accès T.

Le terminal multi-accès T vérifie si le signal reçu portant le service se dégrade ***detect_N.*** Lorsque le terminal multi-accès T, notamment un procédé de mobilité de réseau d'accès mis en oeuvre par ce terminal multi-accès T, détecte une dégradation du signal reçu ***OK***, celui-ci demande l'établissement d'une session de communication avec un dispositif de gestion de mobilité de réseaux d'accès hétérogènes DMRA, en particulier en envoyant une requête d'établissement d'une session de communication dmd_com_DMRA avec ledit dispositif de gestion de mobilité DMRA.

Une session de communication ss_com est ouverte entre le terminal multi-accès T et le dispositif de gestion de mobilité DMRA, éventuellement suite à une acceptation OK_com_DMRA de communication donnée par le dispositif de gestion de mobilité DMRA.

Durant cette session de communication, un procédé de gestion de mobilité ***mob*_*RA*** mis en oeuvre par le terminal multi-accès T récupère (non illustré) auprès du dispositif de gestion de mobilité DMRA les informations de topologie et les règles de sélection de réseau d'accès lui permettant de décider sur quel deuxième réseau d'accès le terminal va devoir ouvrir une session d'accès pour lui permettre de continuer à bénéficier du service sans dégradation, et en particulier, à quel point d'accès d'un deuxième réseau d'accès il va devoir se connecter pour établir cette nouvelle session d'accès au service afin de maintenir la session de service. Le procédé de gestion de mobilité ***mob RA*** comporte alors une émission du terminal multi-accès T vers un point d'accès d'un deuxième réseau d'accès B_RA2 d'une requête de demande d'accès au service dm_acc_S_RA2 qui la transmet au dispositif de fourniture de service FS.

Notamment, une fois la session de communication ss_com sécurisée établie entre le terminal multi-accès T et la plateforme ANDSF DMRA, le terminal multi-accès T retrouve à l'aide d'une transaction de requête et réponse permettant, en particulier, l'échange de fichiers XML contenant les deux informations sur la topologie des réseaux d'accès et de règles de mobilité les informations nécessaires pour la découverte et la sélection des réseaux d'accès alternatifs.

Une session d'accès au service SS_ACC_S_RA2 est ouverte entre le terminal multi-accès T et le dispositif de fourniture de service FS, à travers le deuxième réseau d'accès RA2 via le point d'accès B_RA2, éventuellement suite à une acceptation OK_S_RA2 de fourniture de service donnée par le dispositif de fourniture de service FS.

L'ouverture ou établissement de cette session d'accès SS_ACC_S_RA2 au service S via le point d'accès B_RA2 du deuxième réseau d'accès déclenche :
- la clôture de la session d'accès SS_ACC_S_RA1 au même service S via le point d'accès B_RA1 du premier réseau d'accès,
- Eventuellement, la clôture de la session de communication ss_com entre le terminal multi-accès T et le dispositif de gestion de mobilité DMRA,
- et la fin du procédé de gestion de mobilité ***mob_RA.***
Le terminal multi-accès T continue à vérifier si le signal reçu portant le service se dégrade ***detec_N.***

Si le terminal multi-accès T, notamment un procédé de mobilité de réseau d'accès mis en oeuvre par ce terminal multi-accès T, détecte à nouveau une dégradation du signal reçu ***OK***, celui-ci demande à nouveau l'établissement d'une session de communication avec un dispositif de gestion de mobilité de réseaux d'accès hétérogènes DMRA, en particulier en envoyant une requête d'établissement d'une session de communication dmd_com_DMRA avec ledit dispositif de gestion de mobilité DMRA.

Une session de communication ss_com est ouverte entre le terminal multi-accès T et le dispositif de gestion de mobilité DMRA, éventuellement suite à une acceptation OK_com_DMRA de communication donnée par le dispositif de gestion de mobilité DMRA.

Durant cette session de communication, un procédé de gestion de mobilité *mob_RA* mis en oeuvre par le terminal multi-accès T récupère (non illustré) auprès du dispositif de gestion de mobilité DMRA les informations de topologie lui permettant de décider sur quel deuxième réseau d'accès le terminal va devoir ouvrir une session d'accès pour lui permettre de continuer à bénéficier du service sans dégradation, et en particulier, à quel point d'accès d'un deuxième réseau d'accès il va devoir se connecter pour établir cette nouvelle session d'accès au service afin de maintenir la session de service, en l'occurrence à nouveau un point d'accès B_RA1 du premier réseau d'accès, généralement distinct du point d'accès B_RA1 du premier réseau utilisé précédemment. Le procédé de gestion de mobilité ***mob RA*** comporte alors une émission du terminal multi-accès T vers ce point d'accès du premier réseau d'accès B_RA1 d'une requête de demande d'accès au service dm_acc_S_RA1 qui la transmet au dispositif de fourniture de service FS.

Une session d'accès au service SS_ACC_S_RA1 est ouverte entre le terminal multi-accès T et le dispositif de fourniture de service FS, à travers le premier réseau d'accès RA1 via le point d'accès B_RA1, éventuellement suite à une acceptation OK_S_RA1 de fourniture de service donnée par le dispositif de fourniture de service FS.

L'ouverture ou établissement de cette session d'accès SS_ACC_S_RA1 au service S via le point d'accès B_RA1 du premier réseau d'accès déclenche :
- la clôture de la session d'accès SS_ACC_S_RA2 au même service S via le point d'accès B_RA2 du deuxième réseau d'accès,
- Éventuellement, la clôture de la session de communication ss_com entre le terminal multi-accès T et le dispositif de gestion de mobilité DMRA,
- et la fin du procédé de gestion de mobilité ***mob***_***RA***.

La session de service ss_S alors supportée par la session d'accès SS_ACC_S_RA1 se termine avec la clôture de cette session d'accès, éventuellement sur demande du terminal multi-accès T.

Les figures 2a et 2b illustrent un schéma simplifié des échanges de flux lors de l'accès à un service. Deux mobilités de réseaux d'accès utilisant un procédé de gestion de session de communication entre un terminal multi-accès et un dispositif de gestion de mobilité de réseaux d'accès hétérogène selon l'invention sont effectuées (à titre d'exemple), dans deux modes de réalisations de ce procédé selon l'invention.

Les figures 2a et 2b propose un terminal multi-accès T mettant en oeuvre un procédé de gestion d'une session de communication ***g_ss_com*** entre un terminal multi-accès T et un dispositif de gestion de mobilité DMRA de réseaux d'accès hétérogènes selon l'invention. Un procédé de gestion d'une session de communication ***g_ss_com*** peut de manière complémentaire (non illustrée) être aussi mis en oeuvre par le dispositif de gestion de mobilité DMRA, et de manière alternative (non illustrée) être mis en oeuvre uniquement dans ce dispositif de gestion de mobilité DMRA. Le procédé de gestion d'une communication mis en oeuvre par un dispositif de gestion de mobilité déclenchera le maintien au plus tôt lors de l'établissement de la session de communication demandée par le terminal multi-accès. En outre, le procédé de gestion d'une communication mis en oeuvre par un dispositif de gestion de mobilité demandera au terminal multi-accès de la clôture de la session de service afin de cesser le maintien au plus tard à la clôture de cette session de service.

Le procédé de gestion d'une session de communication ***g_ss_com*** comporte un maintien ***m_ss*** d'une session de communication ss_com ouverte entre un terminal multi-accès T et un dispositif de gestion de mobilité DMRA de réseaux d'accès hétérogènes durant une session d'accès SS_S dudit terminal T à un service S fournit par un dispositif de fourniture de service FS. Dans le cas illustré par la figure 2a, le maintien ***m_ss*** de la session de communication est effectué tant que le terminal multi-accès est en mobilité.

Le principe de l'invention consiste à garder la session de communication ss_com entre le terminal mobile et le serveur ANDSF ouverte pendant l'exécution du service demandé ou reçu par l'utilisateur. Ainsi, durant une session de service ss_S, le délai de mobilité d'accès est au moins réduit lors des mobilités ultérieures à la première réduisant ainsi le temps de la découverte des réseau alternatifs et par conséquent évitant la dégradation du service.

Il peut être envisagé que le maintien de la session de communication soit effectuée pendant une période prédéterminée à compter de la fin de la dernière mobilité de réseau d'accès, ou encore en fonction de statistique de mobilité de réseau d'accès pour la fourniture du service. Ainsi des services liés à la navigation ou à la localisation seront certainement plus sensibles à la mobilité de réseau d'accès et pourront avoir des périodes de maintien plus longues que des services généralement utilisés de manière sédentaire.

Il peut être envisagé que le maintien de la session de communication soit effectuée pendant une période fonction de la qualité du signal reçu ou de la qualité du service. Il peut être envisagé que le maintien de la session de communication soit effectuée pendant une période fonction d'une probabilité de mobilité de réseau d'accès.

Il peut aussi être envisagé que le maintien de la session de communication soit effectué jusqu'à réception d'une commande de fin de maintien donné soit par l'utilisateur du terminal multi-accès (permettant ainsi à l'utilisateur sachant qu'il n'en a plus l'utilité de décharger le réseau), soit par le dispositif de fourniture de service FS, soit par le terminal multi-accès T, soit par le dispositif de gestion de mobilité (DMRA) en particulier lorsque dans la zone géographique et les zones voisines du terminal aucun autres réseaux d'accès n'est disponible.

Lorsqu'un terminal multi-accès T souhaite accéder à un service délivré par un dispositif de fourniture de service FS, le terminal multi-accès T se trouvant, en particulier, dans la zone de couverture d'un point d'accès B_RA1 d'un premier réseau d'accès RA1 en fait la demande à travers ce premier réseau d'accès RA1, notamment en envoyant une requête de demande d'accès au service dm_acc_S_RA1 à ce point d'accès B_RA1 qui la transmet au dispositif de fourniture de service FS.

Une session de service ***ss_S*** est ouverte entre le terminal multi-accès T et le dispositif de fourniture de service FS permettant la fourniture d'un service S par le dispositif de fourniture de service FS au terminal multi-accès S à travers des réseaux d'accès hétérogènes.

En particulier, une session d'accès au service SS_ACC_S_RA1 est ouverte entre le terminal multi-accès T et le dispositif de fourniture de service FS, à travers le premier réseau d'accès RA1 via le point d'accès B_RA1, éventuellement suite à une acceptation OK_S_RA1 de fourniture de service donnée par le dispositif de fourniture de service FS. L'ouverture de cette session d'accès correspond à l'ouverture de la session de service ss_S permettant au dispositif de fourniture FS de fournir le service S demander au terminal multi-accès T.

Le terminal multi-accès T vérifie, par exemple, si le signal reçu portant le service se dégrade ***detec_N.*** Lorsque le terminal multi-accès T, notamment un procédé de mobilité de réseau d'accès mis en oeuvre par ce terminal multi-accès T, détecte une dégradation du signal reçu ***OK***, celui-ci demande l'établissement d'une session de communication avec un dispositif de gestion de mobilité de réseaux d'accès hétérogènes DMRA, en particulier en envoyant une requête d'établissement d'une session de communication dmd_com_DMRA avec ledit dispositif de gestion de mobilité DMRA.

Une session de communication ss_com est ouverte entre le terminal multi-accès T et le dispositif de gestion de mobilité DMRA, éventuellement suite à une acceptation OK_com_DMRA de communication donnée par le dispositif de gestion de mobilité DMRA. Notamment, le procédé de gestion d'une session de communication ***g_ss_com*** demande l'établissement de cette session de communication ss_com entre le terminal multi-accès T et le dispositif de gestion de mobilité DMRA, par exemple en déclenchant l'émission d'une requête d'établissement d'une session de communication dmd_com_DMRA avec ledit dispositif de gestion de mobilité DMRA, en l'occurrence du terminal multi-accès T vers le dispositif de gestion de mobilité DMRA sur la figure 2a, et le cas échant en recevant une acceptation OK_com_DMRA, en l'occurrence du dispositif de gestion de mobilité DMRA sur la figure 2a.

Durant cette session de communication, un procédé de gestion de mobilité ***mob_RA*** mis en oeuvre par le terminal multi-accès T récupère (non illustré) auprès du dispositif de gestion de mobilité DMRA les informations de topologie lui permettant de décider sur quel deuxième réseau d'accès le terminal va devoir ouvrir une session d'accès pour lui permettre de continuer à bénéficier du service sans dégradation, et en particulier, à quel point d'accès d'un deuxième réseau d'accès il va devoir se connecter pour établir cette nouvelle session d'accès au service afin de maintenir la session de service. Le procédé de gestion de mobilité ***mob RA*** comporte alors une émission du terminal multi-accès T vers un point d'accès d'un deuxième réseau d'accès B_RA2 d'une requête de demande d'accès au service dm_acc_S_RA2 qui la transmet au dispositif de fourniture de service FS.

Une session d'accès au service SS_ACC_S_RA2 est ouverte entre le terminal multi-accès T et le dispositif de fourniture de service FS, à travers le deuxième réseau d'accès RA2 via le point d'accès B_RA2, éventuellement suite à une acceptation OK_S_RA2 de fourniture de service donnée par le dispositif de fourniture de service FS.

L'ouverture ou établissement de cette session d'accès SS_ACC_S_RA2 au service S via le point d'accès B_RA2 du deuxième réseau d'accès déclenche :
- éventuellement, la clôture de la session d'accès SS_ACC_S_RA1 au même service S via le point d'accès B_RA1 du premier réseau d'accès,
- et la fin du procédé de gestion de mobilité ***mob*_*RA*.**
Le terminal multi-accès T continue à vérifier si le signal reçu portant le service se dégrade ***detect_N.***

A compter de l'ouverture de la session de communication ss_com, le procédé de gestion d'une session de communication ***g_ss_com*** maintient celle-ci ouverte ***m_ss.***

Si le terminal multi-accès T, notamment un procédé de mobilité de réseau d'accès mis en oeuvre par ce terminal multi-accès T, détecte à nouveau une dégradation du signal reçu ***OK**,* un procédé de gestion de mobilité ***mob_RA*** mis en oeuvre par le terminal multi-accès T n'a plus qu'à récupérer (non illustré) auprès du dispositif de gestion de mobilité DMRA les informations de topologie lui permettant de décider sur quel deuxième réseau d'accès le terminal va devoir ouvrir une session d'accès pour lui permettre de continuer à bénéficier du service sans dégradation, et en particulier, à quel point d'accès d'un deuxième réseau d'accès il va devoir se connecter pour établir cette nouvelle session d'accès au service afin de maintenir la session de service, en l'occurrence à nouveau un point d'accès B_RA1 du premier réseau d'accès. Le procédé de gestion de mobilité ***mob RA*** comporte alors une émission du terminal multi-accès T vers ce point d'accès du premier réseau d'accès B_RA1 d'une requête de demande d'accès au service dm_acc_S_RA1 qui la transmet au dispositif de fourniture de service FS.

Une session d'accès au service SS_ACC_S_RA1 est ouverte entre le terminal multi-accès T et le dispositif de fourniture de service FS, à travers le premier réseau d'accès RA1 via le point d'accès B_RA1, éventuellement suite à une acceptation OK_S_RA1 de fourniture de service donnée par le dispositif de fourniture de service FS.

L'ouverture ou établissement de cette session d'accès SS_ACC_S_RA1 au service S via le point d'accès B_RA1 du premier réseau d'accès déclenche :
- la clôture de la session d'accès SS_ACC_S_RA2 au même service S via le point d'accès B_RA2 du deuxième réseau d'accès,
- et la fin du procédé de gestion de mobilité ***mob_RA.***

La session de service alors supportée par la session d'accès SS_ACC_S_RA1 se termine avec la clôture de cette session d'accès, éventuellement sur demande du terminal multi-accès T, le maintien de la session avec le dispositif de gestion de mobilité DMRA se termine. Notamment avec une demande de clôture ***f_ss*** effectuée par le procédé de gestion de session de communication ***g_ss_com,*** la session de communication ss_com est clôturée.

La figure 2b illustre un mode de réalisation dans lequel le maintien ***m_ss*** est déclenché par une demande d'établissement ***o_ss*** de ladite session de service ss_S, en l'occurrence par la demande d'établissement d'une session d'accès dmd_acc_S_RA1 au point d'accès B_RA1 du premier réseau d'accès.

En outre, la figure 2b illustre un mode de réalisation dans lequel le procédé de gestion comporte un arrêt dudit maintien ***m_ss*** déclenchée par une demande de clôture de la session de service ss_S, voire la clôture de la session de service ss_S. De plus, la demande de clôture de la session de service ss_S, voire la clôture de la session de service ss_S, déclenche une clôture f_ss de la session de communication ss_com.

L'invention vise donc aussi un programme comprenant des instructions de code de programme pour l'exécution des étapes d'un procédé de gestion d'une session de communication entre un terminal multi-accès et un dispositif de gestion de mobilité de réseaux d'accès hétérogènes lorsque ledit programme est exécuté par un processeur.

Ce procédé de gestion d'une session de communication permet de diminuer la durée globale du procédé de mobilité entre des systèmes d'accès hétérogènes.

La figure 3 illustre une architecture de communication utilisant un dispositif de gestion de session de communication, selon l'invention, entre un terminal multi-accès et un dispositif de gestion de mobilité de réseaux d'accès hétérogène et/ou un dispositif de gestion de mobilité de réseaux d'accès hétérogène selon l'invention et/ou un terminal multi-accès selon l'invention.

Un objet de l'invention est aussi un dispositif de gestion d'une session de communication entre un terminal multi-accès et un dispositif de gestion de mobilité de réseaux d'accès hétérogènes. Le dispositif de gestion comporte des moyens de maintien d'une session de communication ouverte entre un terminal multi-accès et un dispositif de gestion de mobilité de réseaux d'accès hétérogènes durant une session de service entre ledit terminal multi-accès et un dispositif de fourniture de service, ledit dispositif de fourniture de service étant apte à fournir un service à travers ladite session de service audit terminal multi-accès.

Le terminal multi-accès 1 se déplaçant le long de la flèche double en gras se voit fournir un service S par un dispositif de fourniture de service 2 via une session de service ss_S notamment sur des moyens de service 12. Cette session de service ss_S utilise successivement plusieurs sessions d'accès à travers des réseaux d'accès hétérogènes RA1 et RA2 en raison de la mobilité du terminal multi-accès A.

Le terminal multi-accès 1, en l'occurrence un terminal mobile WLAN/UMTS, est connecté à un réseau de communication, en l'occurrence au réseau coeur mobile, depuis un premier réseau d'accès RA1, en l'occurrence le réseau d'accès UMTS par une première interface 101. L'interface au deuxième réseau d'accès 102, en l'occurrence l'interface WLAN, du terminal multi-accès 1 n'est connectée à aucun point d'accès du deuxième réseau d'accès, en l'occurrence à aucun point d'accès WLAN. Cette interface 102 est donc en mode veille (i.e. économie d'énergie).

Le terminal multi-accès 1 démarre sa session de service ss_S à travers un premier réseau d'accès RA1 (canal de communication avec petit point, au milieu de la figure 3). Supposons que le service invoqué par l'utilisateur est une communication VoIP. Une communication VoIP est établie à travers le premier réseau d'accès RA1, en l'occurrence le réseau UMTS.

L'abonné du terminal multi-accès 1, en l'occurrence WLAN/UMTS, se déplace et entre sous la couverture de sa borne résidentielle WLAN du deuxième réseau d'accès RA2

Supposons que des mécanismes de qualité de service ou QoS (en anglais, Quality of Service) ont été mis en oeuvre dans le réseau résidentiel WLAN de l'abonné. Ces mécanismes permettent le support des services conversationnels tel que le service VoIP. L'opérateur de télécommunication peut avoir intérêt à recommander à son abonné d'utiliser le deuxième réseau d'accès, en l'occurrence un réseau WLAN, à la place du premier réseau d'accès, en l'occurrence un réseau UMTS publique, lorsque l'abonné se trouve dans sa résidence.

La qualité du service se dégradant un dispositif de mobilité 11 du terminal 1 indique de basculer d'une première interface d'accès 101 du terminal 1 au premier réseau d'accès RA1 vers une deuxième interface d'accès 102 du terminal 1 au deuxième réseau d'accès RA2 (canal de communication hachuré sur la figure 3). La qualité du service se dégradant à nouveau le dispositif de mobilité 11 du terminal 1 indique de rebasculer vers la première interface d'accès 101 du terminal 1 au premier réseau d'accès RA1 (canal de communication avec petit point, en haut de la figure 3).

Afin de pouvoir déterminer vers quel réseau d'accès parmi les réseaux d'accès hétérogènes auquel son interface d'accès 10 permet au terminal multi-accès 1 de se connecter et en particulier à quel point d'accès dans la zone géographique où le terminal multi-accès 1 se trouve, le dispositif de mobilité 11 établit une session de communication à travers un réseau de communication 4 avec un dispositif de gestion de mobilité 3 distant. Le dispositif de gestion de mobilité 3 comporte notamment un dispositif de consultation 31 permettant de récupérer dans une base de données 32 d'informations sur la topologie des réseaux d'accès hétérogènes, les informations permettant au dispositif de mobilité 11 d'effectuer une mobilité de réseau d'accès. Le dispositif de consultation 31 est notamment apte à transmettre à un terminal de communication multi-accès 1 au moins une information sur la topologie d'au moins un réseau d'accès dans une zone géographique spécifiée.

L'invention propose dans cette architecture des moyens de maintien de cette session de communication ouverte entre le terminal multi-accès 1 et le dispositif de gestion de mobilité de réseaux d'accès hétérogènes durant la session de service ss_S entre ledit terminal multi-accès 1 et un dispositif de fourniture de service 2, ledit dispositif de fourniture de service étant apte à fournir un service à travers ladite session de service audit terminal multi-accès.

Les différentes variantes de l'invention peuvent être implémentées seules ou en combinaison.

Dans une première variante de l'invention, le dispositif de gestion de mobilité 3 comporte de tels moyens de maintien 33 En particulier, le dispositif de gestion de mobilité 3 comporte un dispositif de gestion d'une session de communication (non illustré) comportant de tels moyens de maintien 33. Dans une deuxième variante de l'invention, le terminal multi-accès 1 comporte de tels moyens de maintien 133. En particulier, le terminal multi-accès 1 comporte un dispositif de gestion d'une session de communication 13 comportant de tels moyens de maintien 13.

Dans une troisième variante de l'invention, le terminal multi-accès 1 comporte des moyens de maintien 133 lui permettant d'envoyer périodiquement des notifications vers le serveur ANDSF 31 afin de forcer la session de communication ss_com sécurisé à rester ouverte (notamment sous forme de tunnel sécurisé tel que VPN). Ce type de notifications est en particulier des messages *Keep Alive* par exemple au niveau de la couche protocolaire TCP.

Si la session de communication ss_com est déjà ouverte (notamment dès l'ouverture de la session de service ss_S), le terminal multi-accès 1 fait simplement une transaction OMA-DM, enregistre les informations topologie et commence la découverte des réseaux d'accès alternatifs sur la base de ces informations. Le terminal mobile n'est pas obligé de contacter la plateforme d'authentification (non illustré) étant donné que la session de communication sécurisée est déjà établi.

Le terminal multi-accès 1 sélectionne le deuxième réseau d'accès, en l'occurrence un réseau d'accès WLAN, en suivant les recommandations envoyées dans l'information de règle de mobilité. Ensuite, le terminal multi-accès 1 démarre le procédé de recherche (scan en anglais) du point d'accès du deuxième réseau sur l'interface 102 avec ce deuxième réseau d'accès, en l'occurrence WLAN, du terminal multi-accès 1 et effectue des mesures sur les points d'accès WLAN présents dans l'information sur la topologie des réseaux d'accès et qui sont identifiés par le terminal multi-accès 1. Le terminal multi-accès 1 sélectionne ensuite le point d'accès du deuxième réseau, en l'occurrence le point d'accès WLAN, le plus prioritaire et ayant une qualité de signal suffisamment élevée pour gérer le service en cours d'exécution dans le terminal multi-accès 1. En l'occurrence la borne résidentielle WLAN de l'abonné.

Une fois le point d'accès du deuxième réseau d'accès, point d'accès WLAN en l'occurrence, sélectionné, le terminal multi-accès 1 initie le procédé de mobilité à travers ce deuxième réseau d'accès en utilisant le mécanisme et la signalisation appropriés.

L'abonné s'éloigne de sa borne résidentielle WLAN et l'appel en cours commence à se dégrader. Le terminal multi-accès 1 sélectionne de nouveau le réseau UMTS et rebascule la session VoIP sur le réseau UMTS.

Ainsi, lorsqu'un abonné invoque un service S sur son terminal multi-accès 1, le terminal multi-accès 1 contactera la plateforme ANDSF 3 et gardera la session de communication ***ss_com*** avec la plateforme ANDSF 3 ouverte pendant la durée d'exécution du service grâce aux notifications *Keep Alive.* Autrement dit, lorsque le terminal multi-accès 1 possède une connexion dédiée avec le réseau, la session de communication ss_com entre le terminal multi-accès 1 et la plateforme ANDSF 3 restera ouverte.

L'avantage est l'optimisation du temps de mobilité entre des réseaux d'accès hétérogènes en diminuant la durée de la phase Initiation durant laquelle, le terminal multi-accès 1 détecte la nécessité d'initier le procédé de mobilité ***mob_RA*** en se basant sur divers déclencheurs (e.g. la dégradation du canal de transmission de service) et par conséquent exécute le procédé de découverte des réseaux d'accès alternatifs en utilisant la base de données ANDSF.

En effet, lorsque le terminal multi-accès 1, ayant une session de service ss_S ouverte avec le réseau, décide d'entrer dans la phase de découverte des réseaux alternatifs, il peut récupérer des informations telles que des informations de découverte des réseaux d'accès encore appelées informations sur la topologies des réseaux d'accès ou *Discovery Information* en anglais et/ou des informations de règles de mobilité d'accès ou *Policy Information* en anglais en faisant uniquement un provisionnement OMA-DM auprès du serveur ANDSF 31.

Le terminal multi-accès 1 évalue les paramètres internes des communications avec le réseau et identifie, par exemple la dégradation de la qualité de l'un des services en cours d'exécution dans le terminal multi-accès 1. Le terminal multi-accès 1 décide de découvrir les réseaux d'accès alternatifs se trouvant dans sa localisation en vue d'initier le procédé de mobilité. Le terminal multi-accès 1 cherche dans sa mémoire interne s'il existe des informations de type information sur la topologie des réseaux d'accès (*Discovery Information)* et/ou information de règles de mobilité (*Policy Information*) qui auraient antérieurement été envoyées par la plateforme ANDSF 3 et qui soient valides dans la localisation courante du terminal multi-accès 1. Lorsque le terminal multi-accès 1, ne trouvant aucune information envoyée par la plateforme ANDSF 3 correspondante à sa localisation courante, décide alors de contacter un des serveurs ANDSF 31 déployés dans le réseau, les étapes suivantes ne seront pas exécutées car la session de communication ss_com a été maintenu notamment grâce aux messages *Keep Alive* TCP :
- découverte du serveur ANDSF 31 le plus approprié (procédure définie dans la spécification 3GPP 24.302) et
- établissement d'une session de communication ss_com sécurisée, notamment sous forme de tunnel sécurisé, avec ce serveur 31.

Un second avantage de ce procédé de gestion d'une session de communication entre un terminal multi-accès 1 et un dispositif de gestion de mobilité 3 est le suivant:
Le terminal multi-accès 1 doit être authentifié avant de se connecter à la plateforme ANDSF 31 au même titre que la plateforme ANDSF doit être authentifiée par le terminal multi-accès 1. Afin de répondre à ce besoin, 3GPP a adopté l'utilisation d'une solution de type GBA (en anglais, Generic Bootstrapping Architecture) pour la solution ANDSF. La solution GBA est décrite dans les spécifications 3GPP TS 33.220 et TS 33.223.

Ainsi, à chaque fois que le terminal multi-accès exécute une opération d'authentification, en l'occurrence une authentification de type GBA (Generic Bootstrap Authentication en anglais) en vue d'établir une session de communication sécurisée, la plateforme d'authentification contacte une base de données réseau d'authentification notamment une base de données AuC (en anglais, Authentication Center) contenant les clés/algorithmes partagés entre le réseau et le terminal multi-accès 1, en l'occurrence la carte à puce du terminal multi-accès de l'abonnée (i.e. la carte SIM). Ceci entrainera la génération de vecteurs d'authentification (en anglais, Authentication Vector) au niveau de la base de données AuC (cette procédure est définie dans la spécification 3GPP TS 33.220). Si le terminal multi-accès 1 opère cette opération fréquemment ces vecteurs d'authentification seront inutilement générés par rapport au cas où le procédé de gestion d'une session de communication de la présente invention serait mis en oeuvre. Il est à noter que ces vecteurs d'authentification constituent une ressource importante pour l'opérateur de télécommunications car ils permettent l'authentification de l'abonné sur la base des informations contenus dans sa carte à puce. Par conséquent, cette ressource doit être utilisée d'une manière optimale. Le procédé gestion d'une session de communication de la présente invention permet de réduire le nombre de génération de ces vecteurs d'authentification. La session de communication sécurisé étant établi une seule fois au début de la communication et gardé ouvert pendant la durée de la communication, évite de générer des vecteurs d'authentification supplémentaires.

La présente invention s'applique au domaine de la mobilité entre réseaux d'accès radio hétérogènes. La gestion de la session de communication entre le terminal multi-accès et le dispositif de gestion de mobilité de réseaux d'accès permet une optimisation de la communication entre un terminal multi-accès et le dispositif de gestion de mobilité de réseaux d'accès, notamment ANDSF qui est un noeud du réseau de transmission par paquet étendu EPS (en anglais, Enhanced Packet System). Elle peut donc être considérée comme s'appliquant au réseau coeur EPS.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. LE programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé de gestion d'une session de communication entre un terminal multi-accès et un dispositif de gestion de mobilité de réseaux d'accès hétérogènes de type ANDSF, **caractérisé en ce que** le procédé de gestion comporte un maintien d'une session de communication ouverte entre ledit terminal multi-accès et ledit dispositif de gestion de mobilité de réseaux d'accès hétérogènes de type ANDSF durant une session de service entre ledit terminal multi-accès et un dispositif de fourniture de service, ladite session de service permettant une fourniture par ledit dispositif de fourniture de service d'un service audit terminal multi-accès, le maintien comportant un envoi périodique de notification par le dit terminal multi-accès vers le dispositif de gestion de mobilité de réseaux d'accès hétérogènes de type ANDSF.

2. Procédé de gestion selon la revendication précédente **caractérisé en ce que** ledit maintien est déclenché par une demande d'établissement d'une session de service.

3. Procédé de gestion selon l'une quelconque des revendications précédentes **caractérisé en ce que** ledit maintien de la session de communication est effectué tant que ladite session de service reste ouverte.

4. Procédé de gestion selon l'une quelconque des revendications précédentes **caractérisé en ce que** le procédé de gestion comporte un arrêt dudit maintien déclenché par une demande de clôture de la session de service.

5. Procédé de gestion selon l'une quelconque des revendications précédentes **caractérisé en ce que** le procédé de gestion comporte une clôture de la session de communication déclenchée par une demande de clôture de la session de service.

6. Programme d'ordinateur comprenant des instructions de code de programme pour l'exécution des étapes du procédé de gestion d'une session de communication entre un terminal multi-accès et un dispositif de gestion de mobilité de réseaux d'accès hétérogènes de type ANDSF selon l'une quelconque des revendications précédentes lorsque ledit programme est exécuté par un processeur.

7. Dispositif de gestion d'une session de communication (13) entre un terminal multi-accès (1) et un dispositif de gestion de mobilité de réseaux d'accès hétérogènes de type ANDSF (3), **caractérisé en ce que** le dispositif de gestion comporte des moyens de maintien (133) d'une session de communication ouverte entre ledit terminal multi-accès et ledit dispositif de gestion de mobilité de réseaux d'accès hétérogènes de type ANDSF durant une session de service entre ledit terminal multi-accès et un dispositif de fourniture de service (2), ledit dispositif de fourniture de service étant apte à fournir un service à travers ladite session de service audit terminal multi-accès, les moyens de maintien comportant un émetteur périodique de notification vers le dispositif de gestion de mobilité de réseaux d'accès hétérogènes de type ANDSF.

8. Terminal (1) multi-accès de communication multi-accès, **caractérisé en ce que** ledit terminal multi-accès comporte :
• Plusieurs interfaces (101, 102) d'accès à des réseaux d'accès hétérogènes,
• un dispositif de mobilité (11) de réseaux d'accès dudit terminal multi-accès entre un premier réseau d'accès parmi lesdits réseaux d'accès et un deuxième réseau d'accès parmi lesdits réseaux d'accès, ledit dispositif de mobilité étant apte à échanger avec un dispositif de gestion de mobilité de réseaux d'accès hétérogène de type ANDSF (3) par une session de communication entre ledit terminal multi-accès et ledit dispositif de gestion de mobilité de réseau d'accès hétérogène de type ANDSF,
• des moyens de maintien d'une session de communication (133) ouverte entre ledit terminal multi-accès et ledit dispositif de gestion de mobilité de réseaux d'accès hétérogènes de type ANDSF durant une session de service entre ledit terminal multi-accès et un dispositif de fourniture de service (2), ledit dispositif de fourniture de service étant apte à fournir un service à travers ladite session de service audit terminal multi-accès, les moyens de maintien comportant un émetteur périodique de notification vers le dispositif de gestion de mobilité de réseaux d'accès hétérogènes de type ANDSF.

## Patentansprüche

1. Verfahren zur Verwaltung einer Kommunikationssitzung zwischen einem Mehrfachzugang-Endgerät und einer Mobilitätsverwaltungsvorrichtung von heterogenen Zugangsnetzen der Art ANDSF, **dadurch gekennzeichnet, dass** das Verwaltungsverfahren eine Aufrechterhaltung einer offenen Kommunikationssitzung zwischen dem Mehrfachzugang-Endgerät und der Mobilitätsverwaltungsvorrichtung von heterogenen Zugangsnetzen der Art ANDSF während einer Dienstsitzung zwischen dem Mehrfachzugang-Endgerät und einer Dienstbereitstellungsvorrichtung aufweist, wobei die Dienstsitzung eine Bereitstellung eines Diensts für das Mehrfachzugang-Endgerät durch die Dienstbereitstellungsvorrichtung erlaubt, wobei die Aufrechterhaltung ein periodisches Senden einer Mitteilung durch das Mehrfachzugang-Endgerät an die Mobilitätsverwaltungsvorrichtung von heterogenen Zugangsnetzen der Art ANDSF aufweist.

2. Verwaltungsverfahren nach dem vorhergehenden Anspruch, **dadurch gekennzeichnet, dass** die Aufrechterhaltung durch eine Anforderung des Aufbaus einer Dienstsitzung ausgelöst wird.

3. Verwaltungsverfahren nach einem der vorhergehenden Ansprüche **dadurch gekennzeichnet, dass** die Aufrechterhaltung der Kommunikationssitzung ausgeführt wird, so lange die Dienstsitzung offen bleibt.

4. Verwaltungsverfahren nach einem der vorhergehenden Ansprüche, **dadurch gekennzeichnet, dass** das Verwaltungsverfahren ein Beenden der Aufrechterhaltung aufweist, das von einer Anforderung des Schließens der Dienstsitzung ausgelöst wird.

5. Verwaltungsverfahren nach einem der vorhergehenden Ansprüche, **dadurch gekennzeichnet, dass** das Verwaltungsverfahren ein Schließen der Kommunikationssitzung aufweist, das von einer Anforderung des Schließens der Dienstsitzung ausgelöst wird.

6. Computerprogramm, das Programmcodeanweisungen für die Ausführung der Schritte des Verwaltungsverfahrens einer Kommunikationssitzung zwischen einem Mehrfachzugang-Endgerät und einer Mobilitätsverwaltungsvorrichtung von heterogenen Zugangsnetzen der Art ANDSF nach einem der vorhergehenden Ansprüche enthält, wenn das Programm von einem Prozessor ausgeführt wird.

7. Vorrichtung zur Verwaltung einer Kommunikationssitzung (13) zwischen einem Mehrfachzugang-Endgerät (1) und einer Mobilitätsverwaltungsvorrichtung von heterogenen Zugangsnetzen der Art ANDSF (3), **dadurch gekennzeichnet, dass** die Verwaltungsvorrichtung Einrichtungen zur Aufrechterhaltung (133) einer offenen Kommunikationssitzung zwischen dem Mehrfachzugang-Endgerät und der Mobilitätsverwaltungsvorrichtung von heterogenen Zugangsnetzen der Art ANDSF während einer Dienstsitzung zwischen dem Mehrfachzugang-Endgerät und einer Dienstbereitstellungsvorrichtung (2) aufweist, wobei die Dienstbereitstellungsvorrichtung über die Dienstsitzung einen Dienst für das Mehrfachzugang-Endgerät bereitstellen kann, wobei die Aufrechterhaltungseinrichtungen einen periodischen Sender einer Mitteilung an die Mobilitätsverwaltungsvorrichtung von heterogenen Zugangsnetzen der Art ANDSF aufweisen.

8. Mehrfachzugang-Endgerät (1) einer Mehrfachzugang-Kommunikation, **dadurch gekennzeichnet, dass** das Mehrfachzugang-Endgerät aufweist:
• mehrere Zugangsschnittstellen (101, 102) zu heterogenen Zugangsnetzen,
• eine Mobilitätsvorrichtung (11) von Zugangsnetzen des Mehrfachzugang-Endgeräts zwischen einem ersten Zugangsnetz unter den Zugangsnetzen und einem zweiten Zugangsnetz unter den Zugangsnetzen, wobei die Mobilitätsvorrichtung sich mit einer Mobilitätsverwaltungsvorrichtung von heterogenen Zugangsnetzen der Art ANDSF (3) durch eine Kommunikationssitzung zwischen dem Mehrfachzugang-Endgerät und der Mobilitätsverwaltungsvorrichtung von heterogenen Zugangsnetzen der Art ANDSF austauschen kann,
• Einrichtungen zur Aufrechterhaltung einer offenen Kommunikationssitzung (133) zwischen dem Mehrfachzugang-Endgerät und der Mobilitätsverwaltungsvorrichtung von heterogenen Zugangsnetzen der Art ANDSF während einer Dienstsitzung zwischen dem Mehrfachzugang-Endgerät und einer Dienstbereitstellungsvorrichtung (2),
wobei die Dienstbereitstellungsvorrichtung über die Dienstsitzung einen Dienst für das Mehrfachzugang-Endgerät bereitstellen kann, wobei die Aufrechterhaltungseinrichtungen einen periodischen Sender einer Mitteilung an die Mobilitätsverwaltungsvorrichtung von heterogenen Zugangsnetzen der Art ANDSF aufweist.

## Claims

1. Method for managing a communication session between a multi-access terminal and a device for managing mobility of heterogeneous access networks of ANDSF type, **characterized in that** the management method comprises a maintaining of a communication session open between said multi-access terminal and said device for managing mobility of heterogeneous access networks of ANDSF type during a service session between said multi-access terminal and a service provision device, said service session allowing a provision by said service provision device of a service to said multi-access terminal, the maintaining comprising a periodic dispatching of notification by said multi-access terminal to the device for managing mobility of heterogeneous access networks of ANDSF type.

2. Management method according to the preceding claim, **characterized in that** said maintaining is triggered by a service session establishment request.

3. Management method according to any one of the preceding claims, **characterized in that** said maintaining of the communication session is performed as long as said service session remains open.

4. Management method according to any one of the preceding claims, **characterized in that** the management method comprises a stopping of said maintaining triggered by a request for closure of the service session.

5. Management method according to any one of the preceding claims, **characterized in that** the management method comprises a closure of the communication session triggered by a request for closure of the service session.

6. Computer program comprising program code instructions for the execution of the steps of the method for managing a communication session between a multi-access terminal and a device for managing mobility of heterogeneous access networks of ANDSF type according to any one of the preceding claims when said program is executed by a processor.

7. Device for managing a communication session (13) between a multi-access terminal (1) and a device for managing mobility of heterogeneous access networks of ANDSF type (3), **characterized in that** the management device comprises means for maintaining (133) a communication session open between said multi-access terminal and said device for managing mobility of heterogeneous access networks of ANDSF type during a service session between said multi-access terminal and a service provision device (2), said service provision device being able to provide a service through said service session to said multi-access terminal, the maintaining means comprising a periodic sender of notification to the device for managing mobility of heterogeneous access networks of ANDSF type.

8. Multi-access terminal (1) for multi-access communication, **characterized in that** said multi-access terminal comprises:
• Several access interfaces (101, 102) for accessing heterogeneous access networks,
• a device for mobility (11) of access networks of said multi-access terminal between a first access network from among said access networks and a second access network from among said access networks, said mobility device being able to exchange with a device for managing mobility of heterogeneous access networks of ANDSF type (3) by a communication session between said multi-access terminal and said device for managing mobility of heterogeneous access network of ANDSF type,
• means for maintaining a communication session (133) open between said multi-access terminal and said device for managing mobility of heterogeneous access networks of ANDSF type during a service session between said multi-access terminal and a service provision device (2), said service provision device being able to provide a service through said service session to said multi-access terminal, the maintaining means comprising a periodic sender of notification to the device for managing mobility of heterogeneous access networks of ANDSF type.
